# FASCICULE DE BREVET EUROPEEN

(11) **EP 2 384 359 B1**
(45) Date de publication et mention de la délivrance du brevet: **07.09.2016**
(21) Numéro de dépôt: 10700875.7
(22) Date de dépôt: 21.01.2010
(51) Int. Cl.: C09D 9/00, C09D 9/04, C23G 5/00

(54) **COMPOSITION DECAPANTE**
ABZIEHMITTEL
STRIPPING COMPOSITION

(30) Priorité: 23.01.2009 FR 0900296
(43) Date de publication de la demande: 09.11.2011
(73) Titulaire: Rhodia Opérations, 93306 Aubervilliers (FR)
(72) Inventeur: BOURDETTE, Arnaud, 77500 Chelles (FR); ZANETTO, Jean-Emile, 69006 Lyon (FR); LASNET DE LANTY, Patrick, 92260 Fontenay-aux-Roses (FR)
(86) Numéro de dépôt international: PCT/EP2010/050696
(87) Numéro de publication internationale: WO 2010/084159

(56) Documents cités:
- EP-A1- 0 389 829
- EP-A1- 0 474 053
- EP-A1- 1 038 928
- EP-A1- 1 160 297
- EP-A2- 0 294 041
- WO-A1-90/08206
- WO-A1-95/27757
- WO-A1-2006/030006
- WO-A1-2008/043807
- DE-C1- 3 438 399
- FR-A1- 2 732 034
- US-A- 4 780 235
- US-A1- 2002 013 241
- US-A1- 2008 081 778

## Description

La présente invention a pour objet une composition décapante comprenant un diester d'acide dicarboxylique. La composition est utile et particulièrement efficace pour décaper des peintures.

Pour le décapage de revêtements, on utilise souvent des compositions décapantes. Nombre de compositions sont nocives et/ou dangereuses pour l'utilisateur (par exemple irritantes ou inflammables) et/ou pour l'environnement (comprenant par exemple des solvants volatiles) et/ou perçues comme telles.

On connait des compositions présentées comme vertes, ayant un faible impact sur l'environnement et/ou ayant une faible nocivité et/ou dangerosité, par exemple les produits commercialisés sous les noms Fluxaf Green et Syntilor.

On connait par ailleurs des compositions à base de solvants perçus comme nocifs pour l'utilisateur et/ou pour l'environnement, par exemple les produits commercialisés sous les dénominations V33, Decapex, Oxistrip, dont l'étiquetage indique une nocivité et/ou dangerosité relativement importante.

Il existe un besoin pour de nouvelles compositions décapantes, ayant un faible impact sur l'environnement et/ou ayant une faible nocivité et/ou dangerosité, et présentant une efficacité améliorée.

L'invention répond à ce besoin en proposant une composition décapante comprenant:
a) au moins 50%, de préférence au moins 60%, en poids d'un mélange de solvants comprenant :
   a1) un diester d'acide dicarboxylique répondant à la formule (I) :

      R¹-OOC-A-COO-R² (I)

      où
      - les groupes R¹ et R², identiques ou différents, représentent un groupe alkyle, aryle, alkylaryle, ou arylalkyle, linéaire ou branché, cyclique ou non cyclique, en C₁-C₂₀,
      - le groupe A représente un groupe alkylène divalent linéaire ou branché, choisi parmi : le groupe A_{MG} de formule -CH(CH₃)-CH₂-CH₂-, le groupe A_{ES} de formule
      - CH(C₂H₅)-CH₂-, le groupe -(CH₂)₄- et leurs mélanges ; et
   a2) au moins un co-solvant différent d'un alcool,
      le rapport en poids entre a2) et a1) étant compris entre 5/50 et 30/70,
      le co-solvant a2) étant choisi parmi :
      - le diméthylsulfoxyde,
      - les cétones, de préférence l'acétone, la méthyléthylcétone, la cyclohexanone, la gamma-butyrolactone, la butanone,
      - les N-alkylpyrrolidones, de préférence la N-méthylpyrrolidone ou la N-éthylpyrrolidone,
      - les esters choisis dans le groupe constitué de l'éthyl-3-éthoxy propionate (EEP), du 1-méthoxy-2-propyl acétate, des formiates d'alkyle comme le formiate d'éthyle, des acétates d'alkyle comme l'acétate de butyle ou l'acétate de benzyle, et du lévilunate de méthyle, et
      - leurs mélanges ou associations ;
b) au moins un tensioactif non ionique, ledit tensioactif non ionique étant un terpène polyalcoxylé ou étant choisi dans le groupe constitué des esters de sorbitan, des huiles de ricin alcoxylées, de préférence éthoxylées, des amines grasses alcoxylées, de préférence éthoxylées, des tristyryl phénol alcoxylés, de préférence éthoxylés, et de leurs mélanges,
c) éventuellement un tensioactif anionique,
d) éventuellement un acide,
e) un alcool,
f) de l'eau, et
g) éventuellement un épaississant.

Selon un mode de réalisation préféré de l'invention, la composition décapante comprend :
- au moins 50%, de préférence entre 50 et 90% en poids d'un diester d'acide dicarboxylique a1) répondant à la formule (I) ci-dessus décrite,
- de 5 à 45% en poids d'au moins un co-solvant a2) différent d'un alcool,
- de 0,1 à 5% en poids d'au moins un tensioactif non ionique b),
- de 0 à 15 % en poids de composés choisi parmi un ou plusieurs composés suivants :
   c) un tensioactif anionique,
   d) un acide,
   e) un alcool,
   f) de l'eau,
   g) un épaississant, l'acool e) et l'eau f) étant présent dans la composition décapante.

L'invention concerne aussi l'utilisation de la composition pour décaper un revêtement présent sur un substrat. L'invention concerne aussi un procédé de décapage mettant en oeuvre la composition, comprenant par exemple une étape d'application de la composition décapante sur un substrat présentant un revêtement à décaper.

### Définitions

Dans la présente demande, sauf indication contraire, les quantités et/ou rapports sont donnés en poids.

Dans la présente demande, sauf indication contraire, toutes les bornes de valeurs, supérieures et/ou inférieures, indiquent que les valeurs sont strictement inférieures ou égales à la borne supérieure, et/ou sont strictement supérieures ou égales à la borne inférieure. Les termes "compris entre" et "de ... à ...." couvrent et divulguent chacune des bornes individuellement, ainsi que les valeurs strictement inférieures excluant la borne supérieure ou strictement supérieures excluant la borne inférieure.

Dans la présente demande, sauf indication contraire, les quantités de matières sont considérées en matière active ou matière sèche.

### a) mélange de solvants

Dans la présente demande on entend par "mélange de solvants" aussi bien un mélange physique préparé préalablement (pré-mélange) qu'une association à partir de sources séparées, le mélange étant alors obtenu lors de la préparation de la composition par mélange des solvants et des autres ingrédients.

### a1) diester d'acide dicarboxylique

On note que selon une variante de l'invention, le diester d'acide dicarboxylique peut se présenter sous la forme d'un mélange de différents diesters d'acides dicarboxyliques de formule (I).

Les groupes R¹ et R², identiques ou différents, peuvent notamment être choisis parmi les groupes méthyle, éthyle, n-propyle, isopropyle, benzyle, phényle, n-butyle, isobutyle, cyclohexyle, hexyle, n-hexyle, isooctyle, 2-éthylhexyle. Ils correspondent aux alcools de formules R¹-OH et R²-OH, identiques ou différents.

Dans la présente demande, on pourra désigner ce diester d'un acide dicarboxylique de formule (I) par "diester", "diester particulier" ou "diester utilisé dans l'invention".

Il est possible d'utiliser un ou plusieurs diesters particuliers. Dans la demande, sauf mention explicite de la présence d'au moins deux diesters particuliers, "un" diester particulier peut désigner un unique diester répondant à la formule (I) ou un mélange ou une association de plusieurs diesters particuliers répondant à la formule (I).

Le groupe A est un groupe alkylène divalent. L'acide correspondant est le composé de formule HOOC-A-COOH. Par abus de langage on peut désigner le groupe A par l'acide auquel il correspond.

Selon l'invention, le groupe A est choisi parmi les groupes suivants:
- le groupe A_{MG} de formule -CH(CH₃)-CH₂-CH₂-, (correspondant à l'acide 2-métylglutarique)
- le groupe A_{ES} de formule -CH(C₂H₅)-CH₂-, (correspondant à l'acide 2-éthylsuccinique),
- le groupe -(CH₂)₄-, et
- leurs mélanges.

Avantageusement, le diester branché est le diméthyle d'acide 2-méthyl glutarique, répondant à la formule suivante:

CH₃-OOC-CH(CH₃)-CH₂-CH₂-COO-CH₃.

Selon un mode préféré de réalisation, le diester particulier se présente sous la forme d'un mélange comprenant les diesters d'acides dicarboxyliques de formules (I'), (I") et éventuellement (II) suivantes:
- R¹-OOC-A_{MG}-COO-R² (I')
- R¹-OOC-A_{ES}-COO-R² (I"),
- éventuellement R¹-OOC-(CH2)₄-COO-R² (II) (diester de l'acide adipique),
   où:
   - A_{MG} est un groupe de formule -CH(CH₃)-CH₂-CH₂-,
   - A_{ES} est un groupe de formule -CH(C₂H₅)-CH₂-.

Dans ces formules (I'), (I") et (II), les groupes R¹ et R² peuvent notamment être des groupes méthyle, éthyle ou isobutyle.

Selon un mode particulièrement préféré de réalisation de la présente invention, le mélange de diesters comprend:
- de 70 à 95% en poids du diester d'acide dicarboxylique de formule (I'), de préférence du diester méthylique,
- de 5 à 30% en poids du diester d'acide dicarboxylique de formule (I"), de préférence du diester méthylique, et
- de 0 à 10% en poids du diester d'acide dicarboxylique de formule (II), de préférence le diester méthylique.

Un mélange de diesters ou le groupe A est branché est commercialisé par Rhodia sous la dénomination Rhodiasolv® IRIS. De tels mélanges, ainsi que des procédés d'obtention appropriés sont notamment décrits dans les documents WO 2007/101929; WO 2007/141404; WO 2008/009792; WO 2008/062058.

Dans encore un autre mode de réalisation de la présente invention, le diester utilisé peut être un mélange de diesters linéaires, par exemple du Rhodiasolv® RPDE, et de diesters branchés, par exemple du Rhodiasolv® IRIS.

La composition peut par exemple comprendre au moins 50% en poids du diester d'acide dicarboxylique, de préférence entre 50 et 90% en poids, encore plus préférentiellement de 60 à 85 % en poids et notamment de 60 à 80% en poids du diester d'acide dicarboxylique.

### a2) co-solvant

Le co-solvant est choisi parmi:
- le diméthylsulfoxyde,
- les cétones, de préférence l'acétone, la méthyléthylcétone, la cyclohexanone, la gamma-butyrolactone, la butanone,
- les N-alkylpyrrolidones, de préférence la N-méthylpyrrolidone ou la N-éthylpyrrolidone,
- les esters choisis parmi l'éthyl-3-éthoxy propionate (EEP), le 1-méthoxy-2-propyl acétate, les formiates d'alkyle comme le formiate d'éthyle , les acétates d'alkyle comme l'acétate de butyle ou l'acétate de benzyle, et le lévilunate de méthyle, et
- leurs mélanges ou associations.

On note qu'il n'est pas exclu qu'un co-solvant appartienne à plusieurs des catégories mentionnées ci-dessus.

On peut décrire l'association du diester avec le diméthylsulfoxyde ou l'ester, de préférence on associe le diester avec le diméthylsulfoxyde ou l'éthyl-3-éthoxy propionate (EEP). De manière avantageuse on peut associer un diester de formule (I) où A est branché avec le diméthylsulfoxyde ou l'ester, de préférence on associe le diester branché avec le diméthylsulfoxyde ou l'éthyl-3-éthoxy propionate (EEP).

La composition peut par exemple comprendre de 5 à 45% en poids, de préférence de 5 à 30% en poids de co-solvant.

Selon un mode de réalisation, le mélange de solvants ne comprend pas de quantités importantes (moins de 5% en poids de préférence moins de 2,5%, de préférence moins 1%, de préférence pas du tout), de solvants de type hydrocarbone aliphatiques et/ou aromatiques, comme les coupes d'hydrocarbures et/ou les solvants paraffiniques (par exemple le white spirit ou les produit des gammes Isopar® ou Solvesso® d'Exxon, Soltrol® de Shell).

### b) tensioactif non ionique

Selon un mode de réalisation la composition ne comprend pas d'autre tensioactif non ionique que le terpène polyalcoxylé. D'une manière avantageuse, ledit tensioactif non ionique terpène polyalcoxylé est un terpène polyéthoxylé et/ou polypropoxylé, de préférence polyéthoxylé et polypropoxylé, les motifs éthoxy et propoxy étant distribués sous forme aléatoire ou sous forme séquentielle.

Le terpène polyalcoxylé peut répondre à la formule (III) suivante:

Z-X-[CH(R⁵)-CH(R⁶)-O]ₙ-[CH₂CH₂-O]ₚ-[CH(R⁵)-CH(R⁶)-O]_{q}-R⁷ (III)

formule dans laquelle
Z représente un radical bicyclo[a,b,c]heptényle ou bicyclo[a,b,c]heptyle, avec
a+b+c = 5
a = 2, 3 ou 4,
b = 2 ou 1
c = 0 ou 1,
ledit radical étant éventuellement substitué par au moins un radical alkyle de C₁-C₆, et comprenant un squelette Z choisi parmi ceux indiqués ci-dessous, ou aux squelettes correspondants, dépourvus de double liaison :

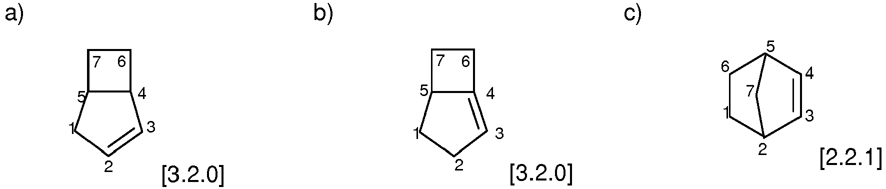

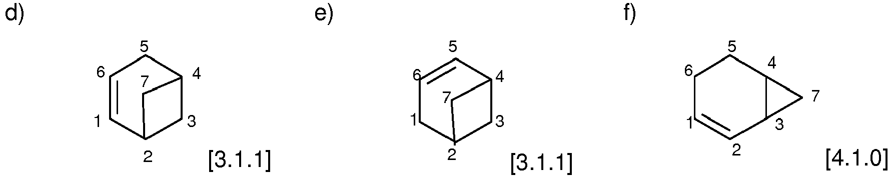

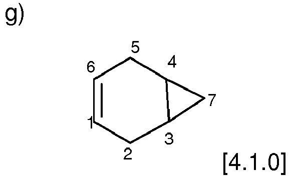

X représente -CH₂-C(R³)(R⁴)-O- ou -O-CH(R'³)-C(R'⁴)-O- dans lesquelles :
R³, R⁴, R'³ et R'⁴, identiques ou différents, représentent l'hydrogène ou un radical hydrocarboné, saturé ou non, linéaire, ramifié ou cyclique, en C₁-C₂₂, de préférence en C₁-C₆ ;
R5 et R6, identiques ou différents, représentent l'hydrogène ou un radical hydrocarboné, saturé ou non, linéaire, ramifié ou cyclique, en C₁-C₂₂, à la condition qu'au moins l'un des radicaux R⁵ ou R⁶ soit différent de l'hydrogène ;
R7 représente l'hydrogène, un radical hydrocarboné, saturé ou non, linéaire, ramifié ou cyclique, aromatique ou non, en C₁-C₂₂, éventuellement substitué (par exemple par un groupe OH);
n, p, q et sont des nombre entiers ou non, supérieurs ou égaux à 0,
n+p+q >1, de préférence de 2 à 200, de préférence de 5 à 50.

De préférence, n, p et q sont choisis de sorte que:
- n est un nombre entier ou non, compris entre 2 et 10 inclus ;
- p est un nombre entier ou non compris entre 3 et 20 inclus;
- q est un nombre entier ou non compris entre 0 et 30 inclus.

Des tensioactifs non ioniques de type terpènes polyalcoxylés sont par exemple commercialisés par Rhodia sous la dénomination Rhodoclean®. On peut mettre en oeuvre par exemple le produit Rhodoclean® MSC.

L'utilisation de tensioactifs de type terpène polyalcoxylé, agissant en synergie avec le diester, permet d'augmenter l'efficacité du diester pour le décapage.

Un premier type de composés est défini par la formule (III) dans laquelle X est égal à -CH₂-C(R³)(R⁴)-O-.

Ainsi, ce composé, ci-après composé (IIIa), correspond à la formule suivante : Z-CH₂-C(R³)(R⁴)-O-[CH(R⁵)-CH(R⁶)-O]ₙ-[CH₂CH₂-O]ₚ-[CH(R⁵)-CH(R⁶)-O]_{q}-R⁷, formule dans laquelle Z, R³, R⁴, R⁵, R⁶, R⁷, n, p et q ont la signification générale indiquée auparavant.

De préférence, le radical Z est choisi parmi les radicaux des formules c) à g).

Il est à noter que le radical Z est plus particulièrement rattaché au reste de la chaîne par l'intermédiaire de l'un quelconque des atomes de carbone 1 à 6, les atomes de carbone 1, 5 et 6 étant préférés.

Par ailleurs, le radical Z peut être substitué sur au moins l'un de ses atomes de carbone, par deux radicaux alkyle en C₁-C₆, de préférence deux radicaux méthyles.

Plus particulièrement, le carbone 7 est substitué par ces deux radicaux alkyle, plus précisément deux méthyles.

L'un des composés préférés utilisé dans la présente invention est donc constitué par un composé dont le radical Z correspond à l'un de ceux apparaissant sur la figure c) à g), et de manière plus préférée, les radicaux d) et e) ; le radical Z étant substitué par deux radicaux méthyles, localisés sur le carbone 7.

D'une manière particulièrement préférée, le radical Z correspond aux formules d) ou e), rattaché au reste de la chaîne par le carbone 5 ou 1, et portant deux substituants méthyles sur le carbone 7.

De préférence, R³, R⁴, identiques ou non, représentent un hydrogène, ou un radical méthyle. De préférence, R³, R⁴, représentent un atome d'hydrogène.

Ainsi que cela a été indiqué auparavant, les radicaux R⁵ et R⁶, identiques ou différents, représentent l'hydrogène ou un radical hydrocarboné, saturé ou non, linéaire, ramifié ou cyclique, en C₁-C₂₂, à la condition qu'au moins l'un des radicaux R⁵ ou R⁶ soit différent de l'hydrogène.

Plus particulièrement, lesdits radicaux représentent l'hydrogène ou un radical alkyle en C₁-C₆, de préférence le radical méthyle ou le radical éthyle, à la condition qu'au moins l'un de ces deux radicaux soit différent de l'hydrogène. De préférence, l'un des radicaux représente l'hydrogène, l'autre un radical méthyle.

R7 représente l'hydrogène, un radical hydrocarboné, saturé ou non, linéaire, ramifié ou cyclique, aromatique ou non, éventuellement substitué par exemple par un groupe OH, en C₁-C₂₂.

Dans le cas où R⁷ est un radical hydrocarboné, ce dernier est plus particulièrement un radical alkyle en C₁-C₆, ou un radical alkylphényle, éventuellement substitué par un halogène (tel que le chlore par exemple).

De préférence, R⁷ est un atome d'hydrogène.

Selon un mode de réalisation particulier de la présente invention, la valeur de n est de 3.

En outre, la valeur de p est plus particulièrement comprise entre 6,2 et 7, bornes comprises. De préférence, p est compris entre 6,3 et 7, bornes comprises.

Selon un autre mode de réalisation particulier de l'invention, n est compris entre 4 et 5, bornes comprises.

De plus, la valeur de p est de préférence comprise 7 inclus et 10 exclu, de préférence entre 8 inclus et 10 exclu.

De préférence, q est égal à 0. Si q est différent de 0, alors q est de préférence compris entre 5 et 25, bornes incluses.
Un second type de composés est défini par la formule (III) dans laquelle X représente -O-CH(R'³)-CH(R'⁴)-O-.

Ainsi, ce composé, ci-après composé (IIIb), correspond à la formule suivante : Z-O-CH(R'³)-C(R'⁴)-O-[CH(R⁵)-CH(R⁶)-O]n-[CH₂CH₂-O]ₚ-[CH(R⁵)-CH(R⁶)-O]_{q}-R⁷, formule dans laquelle Z, R'³, R'⁴, R⁵, R⁶, R⁷, n, p et q ont la signification générale indiquée auparavant.

Selon un mode de réalisation préféré de l'invention, le radical Z correspond au radical c), le composé bicyclique ne comportant pas de double liaison.

Là encore, il est à noter que le radical Z est plus particulièrement rattaché au reste de la chaîne par l'intermédiaire de l'un quelconque des carbone 1 à 6. Les atomes de carbone 1, 3, 4 ou 6 sont plus particulièrement retenus.

Par ailleurs, le radical Z peut être substitué sur au moins l'un de ses atomes de carbone, par deux radicaux alkyle en C₁-C₆, de préférence deux radicaux méthyles.

Plus particulièrement, le carbone 7 est substitué par ces deux radicaux alkyle, plus précisément deux méthyles.

De plus, le radical Z porte sur l'un des atomes de carbone 2 ou 5, un substituant alkyle en C₁-C₆, de préférence un radical méthyle.

Plus particulièrement, et comme mentionné auparavant, les radicaux R'³ et R'⁴, identiques ou différents, représentent l'hydrogène ou un radical hydrocarboné, saturé ou non, linéaire, ramifié ou cyclique, en C₁-C₂₂, à la condition que l'un des deux soit différent de l'hydrogène.

Selon un mode de réalisation particulier de l'invention, lesdits radicaux représentent l'hydrogène ou un radical alkyle en C₁-C₆, de préférence le radical méthyle.

Ce qui a été indiqué à propos des radicaux R⁵, R⁶ et R⁷, ainsi que des valeurs de n, p et q et des variantes préférées liées à ces valeurs, reste valable et ne sera pas repris à nouveau.

Selon un mode de réalisation la composition ne comprend pas d'autre tensioactif que le terpène polyalcoxylé et un éventuel ester phosphate éventuellement polyalcoxylé. Selon un mode de réalisation particulier, la composition selon l'invention ne comprend pas d'alcools gras polyalcoxylés, comme des alcools gras polyéthoxylés et/ou polypropoxylés. Selon un mode de réalisation particulier, la composition selon l'invention ne comprend pas d'alkylphénols polyalcoxylés comme des nonyl ou octyl phénols polyéthoxylés et/ou polypropoxylés et, le cas échéant, terminés par un motif éthyle ou méthyle.

Selon un autre mode de réalisation de l'invention, le tensioactif non ionique peut être choisi parmi les esters de sorbitan, les huiles de ricin alcoxylées, de préférence éthoxylées (par exemple commercialisées sous la dénomination Alkalmus® 696D), les amines grasses alcoxylées, de préférence éthoxylées (par exemple commercialisées sous la dénomination Rhodameen® PN 430), les tristyryl phénols alcoxylées, de préférence éthoxylés (par exemple commercialisés sous la dénomination Soprophor® CY8) ou leurs mélanges.

La composition peut par exemple comprendre de 0,1 à 5% en poids, de préférence de 0,1 à 2%, en poids du tensioactif non ionique.

### c) tensioactif anionique

La composition peut éventuellement comprendre un tensioactif anionique. Il peut notamment s'agir de tensioactif de type sulfates, sulfonates, succinates, carboxylates, phosphates ou phosphonates. De tels tensioactifs peuvent notamment prévenir la corrosion des substrats métalliques traités (notamment les phosphates et phosphonates) et/ou peuvent contribuer à améliorer l'efficacité. La composition peut par exemple comprendre de 0,5% à 5% de tensioactif anionique.

On peut notamment mettre en oeuvre un ester phosphate (ou "phosphate ester") éventuellement polyalcoxylé, sous forme salifiée ou non. Des phosphates esters pouvant être utilisés sont notamment ceux de formule suivante:

[R"-(O-A")_{y}-O]ₓ" P(=O)(OM)_{x'},

où:
- M est choisi parmi un proton, un cation ou un mélange, par exemple H⁺, K⁺, Na⁺
- x' et x" sont égaux à 1 ou 2, à la condition que la somme de x' et x" soit égale à 3,
- y, qui est une valeur moyenne, est compris entre 0 et 100, de préférence entre 1 et 15,
- les groupes R" identiques ou différents, représentent un radical hydrocarboné comprenant 1 à 35 atomes de carbone, et
- les groupes A" identiques ou différents représentent un radical alkylène linéaire ou ramifié comportant 2 à 4 atomes de carbone.

Les groupes R", identiques ou différents représentent un groupe alkyle, alkylaryle, polyalkylaryle, (polyarylalkyl)aryle (les groupes alkyle pouvant être linéaires ou ramifiés, saturés ou insaturés), en C₁-C₃₅, de préférence en C₅-C₂₀. En ce qui concerne les composés polyalcoxylés, il peut s'agir de composés polyéthoxylés. Le degré d'alcoxylation peut notamment être compris entre 0 et 100; de préférence entre 1 et 15.

Plus particulièrement, les groupes R" sont un radical alkyle ou alcényles portant une ou plusieurs insaturations éthyléniques, linéaires ou ramifiés, contenant 8 à 26 atomes de carbone. A titre d'exemples de tels radicaux, on peut citer notamment les radicaux stéaryle, oléyle, linoléyle, et linolényle. En outre, les radicaux R", identiques ou non, peuvent être des radicaux aromatiques portant des substituants alkyle, arylalkyle, ou alkylaryle ; ces radicaux comprenant 6 à 30 atomes de carbone. A titre d'exemples de tels radicaux, on peut citer entre autres les radicaux nonylphényle, mono-, di- et tri-styrylphényle.

Plus particulièrement, les groupements (O-A"), identiques ou non, correspondent à un radical oxyéthyléné, oxypropyléné, oxybutyléné, ou leurs mélanges. De préférence, ledit groupement correspond à un radical oxyéthyléné et/ou oxypropyléné.

Des tensioactifs de type esters phosphates utiles sont notamment commercialisés par Rhodia sous les dénominations Lubrhophos® et Rhodafac®. On cite notamment le produit Rhodafac® RA 600.

### d) acide

La composition peut notamment comprendre un acide. Sans vouloir être lié à une quelconque théorie on pense qu'un tel composé peut notamment aider à casser les chaines polymériques du revêtement à décaper. L'acide est de préférence un acide organique. De tels composés sont notamment préférés pour des raisons de nocivité et/ou de sécurité, et/ou pour des raisons de stabilité du diester (résistance à l'hydrolyse). La composition peut notamment comprendre de 1% à 5% en poids d'acide. Pour les mêmes raisons que celles exposées quant à la nature de l'acide, il est préférable de mettre en oeuvre des quantités modérées.

A titre d'acides pouvant être utilisés on cite notamment les acides carboxyliques aliphatiques tels que l'acide formique ou l'acide acétique ou l'acide oxalique ou l'acide lactique.

### e) activateur

L'activateur est un alcool pouvant ouvrir les chaines polymérique du revêtement à décaper.

On cite notamment le méthanol, l'éthanol, et l'isopropanol. La composition peut notamment comprendre de 0,1% à 5% d'alcool.

### f) eau

La présence d'eau peut être volontaire: l'eau peut contribuer à une activation du décapage. La présence d'eau peut être également subie, comme impureté ou sous-produit des ingrédients de la composition ou comme milieu de dilution des ingrédients. La composition comprend de préférence au plus 10% en poids d'eau, de préférence au plus 5% en poids d'eau. La quantité d'eau peut par exemple être supérieure ou égale à 0,1% en poids.

### g) épaississant

La viscosité de la composition peut être réglée à l'aide d'un épaississant. La viscosité souhaitée peut dépendre du mode d'application (le mode d'application peut dépendre de la viscosité de la composition). A titre indicatif, si un épaississant est utilisé il peut être présent en quantité allant de 0,1 à 5% en poids.

Tous les épaississants connus et/ou usuellement utilisés peuvent être utilisés. Il peut par exemple s'agir de dérivés de cellulose (éthylcellulose, hydroxypropycellulose), de gommes xanthane ou de dérivés, de guars ou de dérivés comme des guars hydroxypropylés, de caroube ou de dérivés, d'alginates ou de dérivés, de polyacrylates, d'amidons ou de dérivés. On peut notamment mettre en oeuvre des celluloses ethers, par exemple les produits commercialisés sous la dénomination Methocel^{™} 311 par Dow.

### Caractéristiques particulières

Selon un mode de réalisation préféré de l'invention, la composition décapante comprend :
- de 60 à 85% en poids d'un diester d'acide dicarboxylique a1) répondant à la formule (I) ci-dessus décrite,
- de 5 à 30% en poids d'au moins un co-solvant a2) différent d'un alcool,
- de 0,1 à 5% en poids d'au moins un tensioactif non ionique b),
- de 0 à 10 % en poids de composés choisi parmi un ou plusieurs composés suivants :
   c) un tensioactif anionique,
   d) un acide,
   e) un alcool,
   f) de l'eau,
   g) un épaississant, l'acool e) et l'eau f) étant présent dans la composition décapante.

Selon un mode de réalisation particulièrement utile et/ou efficace, la composition décapante comprend:
a1) de 60 à 80% en poids du diester d'acide dicarboxylique,
a2) de 5 à 30% en poids de co-solvant choisi parmi le diméthylsulfoxyde, et lesdits esters, de préférence le diméthylsulfoxyde ou l'éthyl-3-éthoxy propionate (EEP),
b) de 0,1 à 2%, en poids du tensioactif terpène polyalcoxylé,
c) de 0,5 à 5% en poids de tensioactif ester phosphate polyalcoxylé, sous forme salifiée ou non.
d) de 1% à 5% en poids d'acide, de préférence organique comme l'acide formique ou acétique ou oxalique ou lactique,
e) de 0,1 à 5% en poids de méthanol,
f) jusqu'à 10% en poids d'eau.

### Procédé de préparation de la composition

On peut préparer la composition par tout procédé approprié, impliquant un mélange des différents ingrédients. Selon un mode de réalisation particulier on peut mettre en oeuvre des pré-mélanges de certains ingrédients. Des pré-mélanges peuvent notamment être des produits disponibles dans le commerce. On peut notamment mettre en oeuvre des pré-mélanges prêt à l'emploi pour introduction dans des compositions (ou "blends" en anglais) du diester et du co-solvant, du diester et du tensioactif non ionique, notamment du terpène polyalcoxylé, ou du diester, du co-solvant et du tensioactif non ionique, notamment du terpène polyalcoxylé.

### Utilisation de la composition décapante

La composition décapante peut être classiquement utilisée pour décaper un revêtement présent sur un substrat.

Le revêtement est typiquement une peinture, de préférence une peinture acrylique, alkyde, glycéro, époxy, polyuréthane, polyester, en solvant aqueux ou non (solvant non aqueux, dit organique). Il peut s'agir d'un vernis ou d'une laque.

Le substrat peut notamment être un substrat en métal, en bois, en céramique, en plastique (il peut s'agir d'une résine ou d'un composite ou d'un thermoplastique). La matière du substrat est assimilée à la matière de la surface sur laquelle le revêtement à décaper est présent. Si le substrat est multi-couche, on considère ainsi que la matière du substrat est la couche touchant le revêtement à décaper.

Le substrat peut notamment être une surface de bâtiment (un mur, un plafond, un sol par exemple), un objet ou une pièce manufacturé, un meuble, une barrière, une grille, un volet, une porte, une carrosserie de véhicule comme un train, un camion, une automobile, un avion, une coque de bateau. Il peut s'agir d'un substrat (et donc du revêtement) destiné à être à l'intérieur ou à l'extérieur, soumis alors aux intempéries, à la pollution et/ou au soleil.

Lors de l'utilisation de la composition décapante, on opère typiquement par mise en contact de la composition avec le substrat revêtu. La mise en contact peut être effectuée par tout moyen classique, notamment par trempage, pulvérisation, application en couche (par exemple à l'aide d'un pinceau ou d'un rouleau). Après un temps d'action approprié (qui peut dépendre du mode d'application et/ou de la quantité appliquée et/ou de la nature du revêtement et/ou de son épaisseur), on peut éliminer le revêtement décapé. On peut notamment opérer par action mécanique et/ou par rinçage par exemple avec de l'eau. On note que le rinçage est typiquement un rinçage sans lessive. L'action mécanique peut par exemple être opérée par action d'un jet, ou d'un objet ou outil de type spatule. On note qu'on peut récupérer la composition après le décapage et/ou la réutiliser, le cas échéant après des opérations de filtration et/ou purification. On peut ainsi au moins en partie recycler la composition. On note que le décapage peut être mis en oeuvre par un fabriquant du substrat (fabriquant et commercialisant des produits manufacturés), par propriétaire ou l'utilisateur du substrat (par exemple un consommateur), ou par un personne opérant un service de décapage. Le service et décapage peut être opéré sur site ou dans un centre de traitement après transport du substrat à décaper.
D'autres détails ou avantages de l'invention pourront apparaitre au vu des exemples qui suivent.
Dans les exemples la lettre C indique un exemple comparatif.

### Exemple 1 - Compositions décapantes

On réalise par mélange les compositions suivantes (les quantités sont indiquées en poids de matière active).

| | Exemple 1.1 | Exemple 1.2 (hors invention) | Exemple 1.3 (comparatif) | Exemple 1.4C |
|---|---|---|---|---|
| Rhodiasolv® IRIS, Rhodia | 71,1% | 81,1% | / | 99% |
| Rhodiasolv® RPDE, Rhodia | / | / | 71,1% | / |
| DMSO | 20% | / | 20% | / |
| Carbonate d'éthylène | / | 10% | / | / |
| Acide formique | 3,5% | 3,5% | 3,5% | / |
| Méthanol | 1% | 1% | 1% | / |
| Rhodafac® RA600, Rhodia | 1,4% | 1,4% | 1,4% | / |
| Rhodoclean® MSC | 1% | 1% | 1% | / |
| Methocel® 311, Dow | 1% | 1% | 1% | 1% |
| Eau | qsp | qsp | qsp | / |

### Exemple 2 - Test de décapage sur substrat métallique

On met en oeuvre un test de décapage avec différentes compositions décapantes sur des éprouvettes revêtues de la peinture suivante (type alkyde en phase solvant): Blanc brillant, de la marque Tollens).

La peinture est appliquée sur une éprouvette en acier (de taille 14cm*2,5cm, de chez Q-panel), à l'aide d'un tire film, de manière à former un film de peinture homogène de 80 µm d'épaisseur.

On applique de manière importante la composition décapante sur la surface des peintures à l'aide d'un pinceau pour peinture acrylique de taille 20. A partir du moment où l'application est finie on déclenche le chronomètre. Le temps de décapage correspond au moment où 90% de la peinture est totalement décollée du substrat métallique. Ce temps caractérise l'efficacité de la composition décapante: plus il est faible plus la composition décapante est efficace.

Les résultats sont présentés dans les tableaux suivants.

| | Exemple 2.1 | Exemple 2.2 | Exemple 2.3 | Exemple 2.4C | Exemple 2.5C |
|---|---|---|---|---|---|
| Composition décapante | Exemple 1.1 | Exemple 1.2 | Exemple 1.3 | Exemple 1.4 | "Fluxaf Green"¹⁾ |
| Temps (min) | 5 min | Entre 1h et 2h | 15 min | Supérieur à 5h | 17 min |

| | | | | | |
|---|---|---|---|---|---|
| ¹⁾ composition décapante disponible dans le commerce, Vliegenthart | | | | | |

| | Exemple 2.6C | Exemple 2.7C | Exemple 2.8C | Exemple 2.9C |
|---|---|---|---|---|
| Composition décapante | "Aquarethane"²⁾ | "V33"³⁾ | "Decapex"⁴⁾ | "Oxystrip GelB"⁵⁾ |
| Temps (min) | 17 min | 5 min | 5 min | 5 min |

| | | | | |
|---|---|---|---|---|
| ²⁾ composition décapante disponible dans le commerce, Syntilor-Blanchon ³⁾ composition décapante disponible dans le commerce, V33 Group ⁴⁾ composition décapante disponible dans le commerce, Dyrup ⁵⁾ composition décapante disponible dans le commerce, Scheidel | | | | |

Les résultats ci-dessus montrent que la composition décapante 1.1 de la présente invention est plus efficace que les compositions présentées comme vertes des exemples comparatifs 2.5C et 2.6C, et aussi efficace que les compositions agressives des exemples comparatifs 2.7C à 2.9C.
On constate également que la composition 1.3 de la présente invention est également efficace, du même ordre que les compositions des exemples comparatifs 2.5C et 2.6C. En outre, il ressort des tests ci-dessus que le Rhodiasolv® IRIS est préféré au Rhodiasolv® RPDE et que le co-solvant DMSO est préféré au carbonate d'éthylène.

### Exemple 3 - Compositions décapantes

On réalise par mélange les compositions suivantes (les quantités sont indiquées en poids de matière active)

| | Exemple 3.1 | Exemple 3.2 | Exemple 3.3 | Exemple 3.4 |
|---|---|---|---|---|
| Rhodiasolv® IRIS, Rhodia | 71,1% | 71,1% | 71,1% | 71,1% |
| DMSO | 20% | 20% | 20% | 20% |
| Acide lactique | 3,5% | 3,5% | 3,5% | 3,5% |
| Méthanol | 1% | 1% | 1% | 1% |
| Rhodoclean® MSC | 1% | - | - | - |
| Soprophor® CY8 | - | 1% | - | - |
| Alkalmus® 696D | - | - | 1% | - |
| Rhodameen® PN430 | - | - | - | 1% |
| Eau | qsp | qsp | qsp | qsp |

### Exemple 4 - Test de décapage sur substrat métallique

On met en oeuvre un test de décapage avec différentes compositions décapantes 3.1 à 3.4 sur des éprouvettes revêtues de la peinture suivante (type alkyde en phase solvant): Blanc brillant, de la marque Tollens).

La peinture est appliquée sur une éprouvette en acier (de taille 14cm*2,5cm, de chez Q-panel), à l'aide d'un tire film, de manière à former un film de peinture homogène de 80 µm d'épaisseur.

On applique de manière importante la composition décapante sur la surface des peintures à l'aide d'un pinceau pour peinture acrylique de taille 20. A partir du moment où l'application est finie on déclenche le chronomètre. On regarde dans quel ordre les compositions arrivent à décaper 90% de la peinture du substrat métallique. Ce classement caractérise l'efficacité de la composition décapante: la première composition est la plus efficace.

Les résultats sont présentés dans les tableaux suivants.

| | Exemple 4.1 | Exemple 4.2 | Exemple 4.3 | Exemple 4.4 |
|---|---|---|---|---|
| Composition décapante | Ex 3.1 (Rhodoclean® MSC) | Ex 3.2 (Soprophor® CY8) | Ex 3.3 (Alkalmus® 696D) | Ex 3.4 (Rhodameen® PN430) |
| Ordre de décapage | 1 ère | 2ème | 3ème | 4ème |

Toutes les compositions 3.1 à 3.4 présentent de bonnes propriétés décapantes, le tensioactif non ionique Rhodoclean® MSC étant le plus performant en termes de rapidité de décapage.

## Revendications

1. Composition décapante comprenant :
a) au moins 50%, de préférence au moins 60%, en poids d'un mélange de solvants comprenant :
a1) un diester d'acide dicarboxylique répondant à la formule (I) :
R¹-OOC-A-COO-R² (I)
où
- les groupes R¹ et R², identiques ou différents, représentent un groupe alkyle, aryle, alkylaryle, ou arylalkyle, linéaire ou branché, cyclique ou non cyclique, en C₁-C₂₀,
- le groupe A représente un groupe alkylène divalent linéaire ou branché, choisi parmi : le groupe A_{MG} de formule -CH(CH₃)-CH₂-CH₂-, le groupe A_{ES} de formule -CH(C₂H₅)-CH₂-, le groupe -(CH₂)₄- et leurs mélanges ; et
a2) au moins un co-solvant différent d'un alcool,
le rapport en poids entre a2) et a1) étant compris entre 5/50 et 30/70,
le co-solvant a2) étant choisi parmi :
- le diméthylsulfoxyde,
- les cétones, de préférence l'acétone, la méthyléthylcétone, la cyclohexanone, la gamma-butyrolactone, la butanone,
- les N-alkylpyrrolidones, de préférence la N-méthylpyrrolidone ou la N-éthylpyrrolidone,
- les esters choisis dans le groupe constitué de l'éthyl-3-éthoxy propionate (EEP), du 1-méthoxy-2-propyl acétate, des formiates d'alkyle comme le formiate d'éthyle, des acétates d'alkyle comme l'acétate de butyle ou l'acétate de benzyle, et du lévilunate de méthyle, et
- leurs mélanges ou associations ;
b) au moins un tensioactif non ionique, ledit tensioactif non ionique étant un terpène polyalcoxylé ou étant choisi dans le groupe constitué des esters de sorbitan, des huiles de ricin alcoxylées, de préférence éthoxylées, des amines grasses alcoxylées, de préférence éthoxylées, des tristyryl phénol alcoxylés, de préférence éthoxylés, et de leurs mélanges,
c) éventuellement un tensioactif anionique,
d) éventuellement un acide,
e) un alcool,
f) de l'eau, et
g) éventuellement un épaississant.

2. Composition décapante selon la revendication 1, **caractérisée en ce qu'**elle comprend de 5 à 45% en poids d'au moins un co-solvant a2) différent d'un alcool, a2) étant tel que défini dans la revendication 1.

3. Composition selon l'une des revendications précédentes, **caractérisée en ce que** R¹ et R² sont des groupes méthyle.

4. Composition selon l'une des revendications précédentes, **caractérisée en ce qu'**elle comprend de 60 à 85 % en poids, de préférence de 60 à 80% en poids du diester d'acide dicarboxylique.

5. Composition selon l'une des revendications précédentes, **caractérisée en ce qu'**elle comprend de 5% à 30% en poids de co-solvant.

6. Composition selon l'une des revendications 1 à 5, **caractérisée en ce que** le tensioactif anionique est un ester phosphate éventuellement polyalcoxylé, sous forme salifiée ou non.

7. Composition selon l'une des revendications précédentes, **caractérisée en ce que** qu'elle comprend de 0,1% à 5% en poids, de préférence de 0,1% à 2%, en poids du tensioactif non ionique.

8. Composition selon l'une des revendications précédentes, **caractérisée en ce qu'**elle comprend de 0,5% à 5% en poids de tensioactif anionique.

9. Composition selon l'une des revendications précédentes, **caractérisée en ce que** l'acide est un acide organique, de préférence l'acide formique ou l'acide acétique ou l'acide oxalique ou l'acide lactique.

10. Composition selon l'une des revendications précédentes, **caractérisée en ce qu'**elle comprend de 1% à 5% en poids d'acide.

11. Composition selon l'une des revendications précédentes, **caractérisée en ce que** l'alcool est choisi parmi le méthanol, l'éthanol, et l'isopropanol.

12. Composition selon l'une des revendications précédentes, **caractérisé en ce qu'**elle comprend de 0,1% à 5% en poids d'alcool.

13. Composition selon l'une des revendications précédentes, **caractérisée en ce qu'**elle comprend au plus 10% en poids d'eau, de préférence au plus 5%.

14. Composition selon l'une des revendications précédentes, **caractérisée en ce qu'**elle comprend :
a1) de 60 à 80% en poids du diester d'acide dicarboxylique,
a2) de 5 à 30% en poids de co-solvant choisi parmi le diméthylsulfoxyde, et les esters, de préférence le diméthylsulfoxyde ou l'éthyl-3-éthoxy propionate (EEP), b) de 0,1 à 2%, en poids du tensioactif terpène polyalcoxylé,
c) de 0,5 à 5% en poids de tensioactif ester phosphate polyalcoxylé, sous forme salifiée ou non.
d) de 1% à 5% en poids d'acide, de préférence organique comme l'acide formique ou acétique ou oxalique ou lactique,
e) de 0,1 à 5% en poids de méthanol,
f) de 0,1% à 10% en poids d'eau.

15. Utilisation de la composition selon l'une des revendications précédentes pour décaper un revêtement présent sur un substrat.

16. Utilisation selon la revendication 15, **caractérisée en ce que** le revêtement est une peinture, de préférence une peinture acrylique, alkyde, glycéro, époxy, polyuréthane, polyester, en solvant aqueux ou non.

## Patentansprüche

1. Abbeizmittelzusammensetzung, umfassend:
a) mindestens 50 Gew.-%, vorzugsweise mindestens 60 Gew.-%, einer Mischung von Lösungsmitteln, umfassend:
a1) einen Dicarbonsäurediester der Formel (I):
R¹-OOC-A-COO-R² (I)
wobei
- die Gruppen R¹ und R² gleich oder verschieden sind und für eine lineare oder verzweigte, cyclische oder acyclische C₁-C₂₀-Alkyl-, -Aryl-, -Alkylaryl- oder -Arylalkylgruppe stehen,
- die Gruppe A für eine lineare oder verzweigte zweiwertige Alkylengruppe steht, die ausgewählt ist aus : der Gruppe A_{MG} der Formel -CH(CH₃)-CH₂-CH₂-, der Gruppe A_{ES} der Formel -CH(C₂H₅)-CH₂-, der Gruppe -(CH₂)₄- und Mischungen davon; und a2) mindestens ein von einem Alkohol verschiedenes Cosolvens,
wobei das Gewichtsverhältnis zwischen a2) und
a1) zwischen 5/50 und 30/70 liegt,
wobei das Cosolvens a2) ausgewählt ist aus:
- Dimethylsulfoxid,
- Ketonen, vorzugsweise Aceton, Methylethylketon, Cyclohexanon, gamma-Butyrolacton, Butanon,
- N-Alkylpyrrolidonen, vorzugsweise N-Methylpyrrolidon oder N-Ethylpyrrolidon,
- Estern aus der Gruppe bestehend aus 3-Ethoxy-propionsäureethylester (EEP), Essigsäure-1-methoxy-2-propylester, Ameisensäurealkylestern wie Ameisensäureethylester, Essigsäurealkylestern wie Essigsäurebutylester oder Essigsäurebenzylester und Lävulinsäuremethylester, und
- Mischungen oder Kombinationen davon;
b) mindestens ein nichtionisches Tensid, wobei das nichtionische Tenside ein polyalkoxyliertes Terpen ist oder aus der Gruppe bestehend aus Sorbitanestern, alkoxylierten, vorzugsweise ethoxylierten, Ricinusölen, alkoxylierten, vorzugsweise ethoxylierten, Fettaminen, alkoxylierten, vorzugsweise ethoxylierten, Tristyrylphenolen und Mischungen davon ausgewählt ist,
c) gegebenenfalls ein anionisches Tensid,
d) gegebenenfalls eine Säure,
e) einen Alkohol,
f) Wasser und
g) gegebenenfalls einen Verdicker.

2. Abbeizmittelzusammensetzung nach Anspruch 1, **dadurch gekennzeichnet, dass** sie 5 bis 45 Gew.-% mindestens eines Cosolvens a2), das von einem Alkohol verschieden ist, umfasst, wobei a2) wie in Anspruch 1 definiert ist.

3. Zusammensetzung nach einem der vorhergehenden Ansprüche, **dadurch gekennzeichnet, dass** R¹ und R² für Methylgruppen stehen.

4. Zusammensetzung nach einem der vorhergehenden Ansprüche, **dadurch gekennzeichnet, dass** sie 60 bis 85 Gew.-%, vorzugsweise 60 bis 80 Gew.-%, des Dicarbonsäurediesters umfasst.

5. Zusammensetzung nach einem der vorhergehenden Ansprüche, **dadurch gekennzeichnet, dass** sie 5 bis 30 Gew.-% Cosolvens umfasst.

6. Zusammensetzung nach einem der Ansprüche 1 bis 5, **dadurch gekennzeichnet, dass** es sich bei dem anionischen Tensid um einen gegebenenfalls polyalkoxylierten Phosphatester in versalzter oder nicht versalzter Form handelt.

7. Zusammensetzung nach einem der vorhergehenden Ansprüche, **dadurch gekennzeichnet, dass** sie 0,1 bis 5 Gew.-%, vorzugsweise 0,1 bis 2 Gew.-%, des nichtionischen Tensids umfasst.

8. Zusammensetzung nach einem der vorhergehenden Ansprüche, **dadurch gekennzeichnet, dass** sie 0,5 bis 5 Gew.-% anionisches Tensid umfasst.

9. Zusammensetzung nach einem der vorhergehenden Ansprüche, **dadurch gekennzeichnet, dass** es sich bei der Säure um eine organische Säure, vorzugsweise Ameisensäure oder Essigsäure oder Oxalsäure oder Milchsäure, handelt.

10. Zusammensetzung nach einem der vorhergehenden Ansprüche, **dadurch gekennzeichnet, dass** sie 1 bis 5 Gew.-% Säure umfasst.

11. Zusammensetzung nach einem der vorhergehenden Ansprüche, **dadurch gekennzeichnet, dass** der Alkohol aus Methanol, Ethanol und Isopropanol ausgewählt ist.

12. Zusammensetzung nach einem der vorhergehenden Ansprüche, **dadurch gekennzeichnet, dass** sie 0,1 bis 5 Gew.-% Alkohol umfasst.

13. Zusammensetzung nach einem der vorhergehenden Ansprüche, **dadurch gekennzeichnet, dass** sie höchstens 10 Gew.-% Wasser, vorzugsweise höchstens 5%, umfasst.

14. Zusammensetzung nach einem der vorhergehenden Ansprüche, **dadurch gekennzeichnet, dass** sie Folgendes umfasst:
a1) 60 bis 80 Gew.-% des Dicarbonsäurediesters,
a2) 5 bis 30 Gew.-% Cosolvens, das ausgewählt ist aus Dimethylsulfoxid und Estern, vorzugsweise Dimethylsulfoxid oder 3-Ethoxypropionsäureethylester (EEP),
b) 0,1 bis 2 Gew.-% des polyalkoxylierten Terpen-Tensids,
c) 0,5 bis 5 Gew.-% polyalkoxyliertes Phosphatester-Tensid in versalzter oder nicht versalzter Form,
d) 1 bis 5 Gew.-% Säure, vorzugsweise organische Säure wie Ameisensäure oder Essigsäure oder Oxalsäure oder Milchsäure,
e) 0,1 bis 5 Gew.-% Methanol,
f) 0,1 bis 10 Gew.-% Wasser.

15. Verwendung der Zusammensetzung nach einem der vorhergehenden Ansprüche zum Abbeizen einer auf einem Substrat vorliegenden Beschichtung.

16. Verwendung nach Anspruch 15, **dadurch gekennzeichnet, dass** es sich bei der Beschichtung um einen Anstrich, vorzugsweise einen Acrylharz-, Alkydharz-, Glyceroharz-, Epoxidharz-, Polyurethan- oder Polyester-Anstrich in wässrigem oder nichtwässrigem Lösungsmittel handelt.

## Claims

1. Stripping composition comprising:
a) at least 50%, preferably at least 60%, by weight of a mixture of solvents comprising:
a1) a dicarboxylic acid diester corresponding to formula (I):
R¹- OOC-A-COO-R² (I)
wherein
- the R¹ and R² groups, which may be identical or different, represent a linear or branched, cyclic or non-cyclic, C₁-C₂₀ alkyl, aryl, alkylaryl or arylalkyl group,
- the group A represents a linear or branched divalent alkylene group, selected from: the group A_{MG} of formula -CH(CH₃)-CH₂-CH₂-, the group A_{ES} of formula -CH(C₂H₅)-CH₂-, the group -(CH₂)₄- and mixtures thereof; and
a2) at least one co-solvent other than an alcohol, the weight ratio between a2) and a1) being between 5/50 and 30/70,
the co-solvent a2) being selected from:
- dimethyl sulphoxide,
- ketones, preferably acetone, methyl ethyl ketone, cyclohexanone, gamma-butyrolactone, butanone,
- N-alkylpyrrolidones, preferably N-methylpyrrolidone or N-ethylpyrrolidone,
- esters selected from the group consisting of ethyl 3-ethoxypropionate (EEP), 1-methoxy-2-propyl acetate, alkyl formates such as ethyl formate, alkyl acetates such as butyl acetate or benzyl acetate, and methyl levilunate, and
- mixtures or combinations thereof;
b) at least one non-ionic surfactant, said non-ionic surfactant being a polyalkoxylated terpene or being selected from the group consisting of sorbitan esters, alkoxylated, preferably ethoxylated, castor oils, alkoxylated, preferably ethoxylated, fatty amines, alkoxylated, preferably ethoxylated, tristyryl phenols, and mixtures thereof,
c) optionally an anionic surfactant,
d) optionally an acid,
e) an alcohol,
f) water, and
g) optionally a thickener.

2. Stripping composition according to Claim 1, **characterized in that** it comprises from 5% to 45% by weight of at least one co-solvent a2) other than an alcohol, a2) being as defined in Claim 1.

3. Composition according to either of the preceding claims, **characterized in that** R¹ and R² are methyl groups.

4. Composition according to one of the preceding claims, **characterized in that** it comprises from 60% to 85% by weight, preferably from 60% to 80% by weight, of the dicarboxylic acid diester.

5. Composition according to one of the preceding claims, **characterized in that** it comprises from 5% to 30% by weight of co-solvent.

6. Composition according to one of Claims 1 to 5, **characterized in that** the anionic surfactant is an optionally polyalkoxylated phosphate ester, in salified or non-salified form.

7. Composition according to one of the preceding claims, **characterized in that** it comprises from 0.1% to 5% by weight, preferably from 0.1% to 2% by weight, of the non-ionic surfactant.

8. Composition according to one of the preceding claims, **characterized in that** it comprises from 0.5% to 5% by weight of anionic surfactant.

9. Composition according to one of the preceding claims, **characterized in that** the acid is an organic acid, preferably formic acid or acetic acid or oxalic acid or lactic acid.

10. Composition according to one of the preceding claims, **characterized in that** it comprises from 1% to 5% by weight of acid.

11. Composition according to one of the preceding claims, **characterized in that** the alcohol is selected from methanol, ethanol and isopropanol.

12. Composition according to one of the preceding claims, **characterized in that** it comprises from 0.1% to 5% by weight of alcohol.

13. Composition according to one of the preceding claims, **characterized in that** it comprises at most 10% by weight of water, preferably at most 5%.

14. Composition according to one of the preceding claims, **characterized in that** it comprises:
a1) from 60% to 80% by weight of the dicarboxylic acid diester,
a2) from 5% to 30% by weight of co-solvent selected from dimethyl sulphoxide, and esters, preferably dimethyl sulphoxide or ethyl 3-ethoxypropionate (EEP), b) from 0.1% to 2% by weight of polyalkoxylated terpene surfactant,
c) from 0.5% to 5% by weight of polyalkoxylated phosphate ester surfactant, in salified or non-salified form,
d) from 1% to 5% by weight of acid, preferably organic acid, such as formic or acetic or oxalic or lactic acid,
e) from 0.1% to 5% by weight of methanol,
f) from 0.1% to 10% by weight of water.

15. Use of the composition according to one of the preceding claims, for stripping a coating present on a substrate.

16. Use according to Claim 15, **characterized in that** the coating is a paint, preferably an acrylic, alkyd, glycerol, epoxy, polyurethane or polyester paint, in an aqueous or non-aqueous solvent.
